# EUROPEAN PATENT SPECIFICATION

(11) **EP 1 787 870 B1**
(45) Date of publication and mention of the grant of the patent: **01.07.2009**
(21) Application number: 06124308.5
(22) Date of filing: 17.11.2006
(51) Int. Cl.: B60R 19/18, B60R 19/34

(54) **Vehicle impact energy absorbing structure in particular for front impacts at variable angle**
Aufprallenergie absorbierende Kraftfahrzeugsstruktur, insbesondere für Frontalaufprälle mit einem variablen Winkel
Structure de véhicule apte à absorber l'énergie de choc, en particulier pour chocs frontaux avec un angle variable

(30) Priority: 18.11.2005 IT TO20050816
(43) Date of publication of application: 23.05.2007
(73) Proprietor: FIAT AUTO S.p.A., 10135 Torino (IT)
(72) Inventor: Del Nero, Gianfranco, 10135 Torino (IT); Genovese, Roberto, 10135 Torino (IT); Giachi, Daniele, 10135 Torino (IT); Caiero, Dario, 10135 Torino (IT); Schierano, Marco, 10135 Torino (IT)
(74) Representative: Rondano, Davide

(56) References cited:
- EP-A- 1 393 986
- US-A- 5 584 518
- US-A1- 2002 047 281
- US-A1- 2004 094 975
- PATENT ABSTRACTS OF JAPAN vol. 2003, no. 12, 5 December 2003 (2003-12-05) & JP 2004 189171 A (TOYOTA MOTOR CORP), 8 July 2004 (2004-07-08)

## Description

The present invention relates to a front impact energy absorbing structure for a vehicle, comprising a pair of longitudinal side struts arranged to be connected to the chassis of the vehicle, a transverse member or cross-member for connecting the struts together, and a pair of support members of the "crash-box" type, each placed between a respective strut and a respective side end portion of the cross-member so as to be deformed by buckling in the event of an impact. Such a structure is generally arranged behind the bumper of a motor vehicle, in particular behind the front bumper, and has the function of absorbing the energy produced by a front impact of the motor vehicle basically due to the deformation under bending of the cross-member and the deformation under buckling of the crash-box support members.

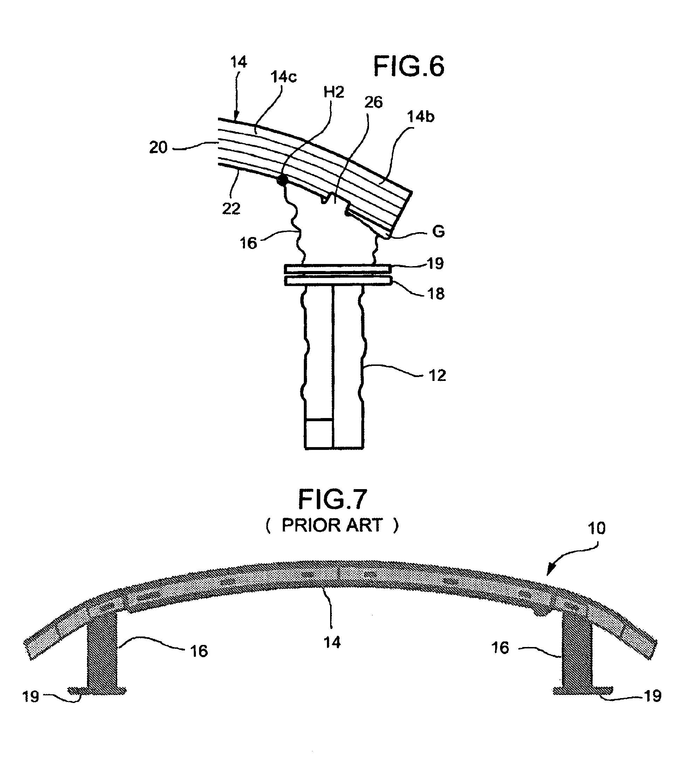

A known example of a vehicle impact energy absorbing structure is illustrated in plan view in Figure 7 of the accompanying drawings. The structure is generally indicated 10 and basically comprises a cross-member 14 and a pair of side support members 16 fixed to the cross-member 14 by welding in the vicinity of the side ends of the cross-member. The two side support members 16 are in turn intended to be connected, by means of respective mounting plates 19, to respective side struts (not shown). The side support members 16 should also have the function of absorbing part of the energy produced in the event of an impact. Actually, the impact energy absorbing action of the two side support members 16 is definitely non very effective because of their configuration.

This known example has then the drawback that it functions properly only for the impact angle for which it was designed, which is usually 0°, that is to say, corresponds to the case of an impact in the longitudinal direction. If, however, the impact occurs at an angle which is different from the nominal one, for example 10°, the cross-member is no longer able to ensure an effective absorbing action of the impact energy, with the consequence that the vehicle structure may suffer damages more serious than the ones calculated during the design stage.

Such a vehicle impact energy absorbing structure is disclosed in document US 2002/0047281 A1

The object of the present invention is therefore to provide a vehicle impact energy absorbing structure of the type specified above, which is able to absorb effectively the impact energy not only in the case of an impact angle of 0° relative to the longitudinal direction of the vehicle, but also at any impact angle ranging between 0° and a predetermined maximum impact angle of at least 10°.

This object is fully achieved according to the present invention by means of a vehicle impact energy absorbing structure having the characteristics defined in Claim 1.

Further advantageous characteristics of the invention are specified in the dependent claims.

The characteristics and advantages of the present invention will become clear from the detailed description which follows, given purely by way of a non-limiting example with reference to the accompanying drawings, in which:
Figure 1 is a plan view of a vehicle front impact energy absorbing structure according to a preferred embodiment of the present invention, in the undeformed condition;
Figure 2 is a front perspective view of the transverse connecting member, or cross-member, of the structure of Figure 1;
Figure 3 is a rear perspective view which shows in an enlarged scale the side portion of the cross-member of the structure of Figure 1;
Figure 4 is a view similar to the one of Figure 1, but showing the structure in the deformed condition following a front impact at an impact angle of 0° against a side end portion of the cross-member;
Figure 5 is a view similar to the one of Figure 1, but showing the structure in the deformed condition following a front impact with an impact angle of 10 ° against a side end portion of the cross-member;
Figure 6 is a view in an enlarged scale of the detail A of Figures 4 and 5, which shows the connection area between the side end of the cross-member opposite to the one against which the impact occurred and the respective longitudinal side strut; and
Figure 7 is a plan view of a vehicle front impact energy absorbing structure according to the prior art, in the undeformed condition.

In the description and the claims which follow, terms such as "longitudinal" and "transverse", "inner" and "outer" or "upper" and "lower" are to be regarded as referring to the assembled condition on the vehicle. Moreover, the following description will refer to a structure for absorbing the energy produced by a front impact, although it is understood that the invention is also obviously applicable to a structure intended to be mounted on the rear of a vehicle for absorbing the energy produced by a rear impact.

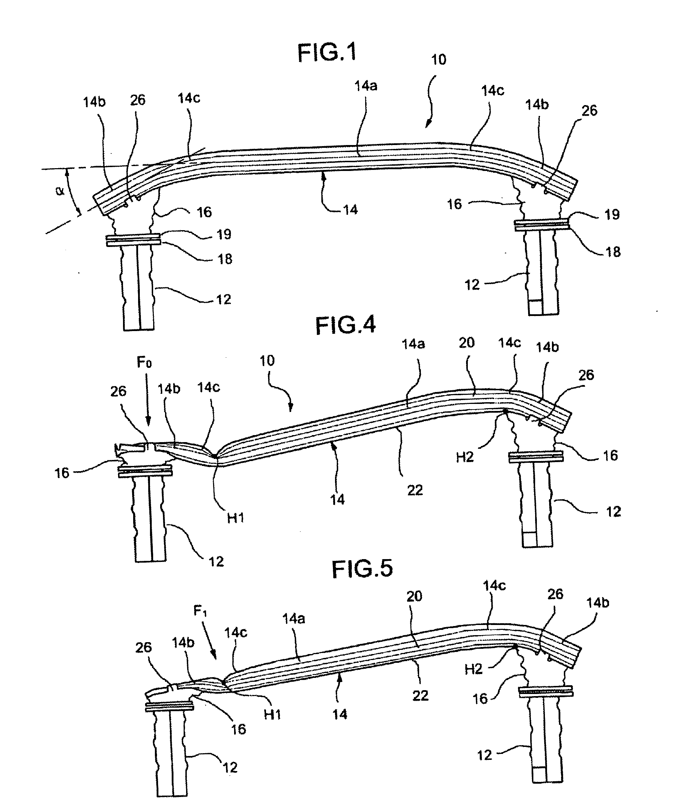

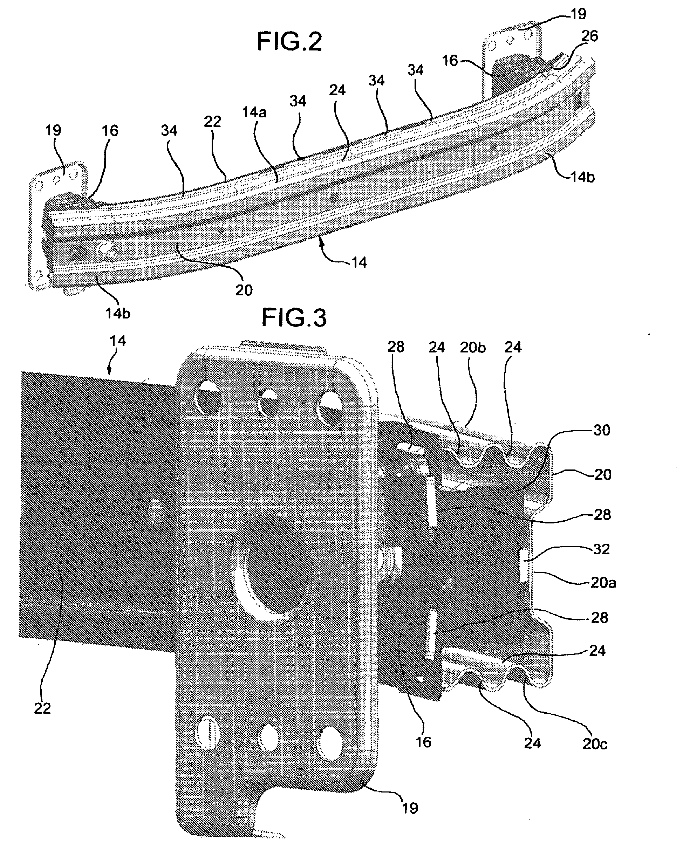

With reference initially to Figures 1 and 2, a vehicle impact energy absorbing structure is generally indicated 10 and basically comprises a pair of longitudinal side struts 12 adapted to be connected in a per-se-known manner to the chassis of the vehicle (not shown), a transverse connecting member or cross-member 14 adapted to connect front end portions of the two struts 12 to each other, and a pair of support members 16 of the "crash-box" type, each arranged between the respective front end portion of a strut 12 and a respective side end portion of the cross-member 14 so as to absorb by buckling part of the energy produced upon an impact.

The struts 12 are of per-se-known type and therefore will not be described in detail. Each strut 12 carries at its front end a mounting plate 18 having through-holes for insertion of fixing screws (not shown), for fixing to a corresponding mounting plate 19 of the respective crash-box 16.

The cross-member 14 is formed according to the invention as a box-shaped component (Figure 3), which comprises a profiled piece 20 having a substantially C-shaped cross-section which is open on the side facing the struts 12 and a vertical back plate 22 which closes the cross-section of the profiled piece 20 and is used for mounting to the crash-boxes 16, as will be explained more clearly in the remaining part of the description. Both the profiled piece 20 and the vertical back plate 22 are advantageously made of high-strength steel. As can be seen in the plan view of Figure 1, the cross-member 14 forms a substantially straight central section 14a, which extends in the transverse direction, and a pair of side sections 14b, which are substantially straight or slightly curved, extend in a direction inclined with respect to the central section 14a at an angle α (Figure 1), the value of which depends on the shape of the vehicle bumper, and are connected to the central section 14a through respective joining sections 14c.

The C-shaped cross-section of the profiled piece 20 of the cross-member 14 is substantially uniform along the entire cross-member and has a vertical wall 20a and a pair of horizontal walls 20b and 20c, i.e. an upper wall and a lower wall, respectively, which have a bellows configuration as a result of which the profiled piece 20 is able to be deformed by buckling upon a front impact. This bellows configuration is obtained by forming on the two walls 20b and 20c a series of ribs 24 which extend over the entire length of the profiled piece 20.

The two crash-boxes 16 are connected to the cross-member 14 at the two inclined side sections 14b of the latter. To this end, the two crash-boxes 16, which apart from that are of per-se-known type, have a front section for connection to the cross-member 14 which is correspondingly inclined and thus has an area greater than the one of the rear section for connection to the mounting plate 19. The connection between each crash-box 16 and the respective inclined side section 14b of the cross-member 14 is obtained by means of a pair of upper and lower retaining lugs 26 (only the upper one of which can be seen in the Figures) which project frontwards from the crash-box 16 and engage each a respective rear end edge of the cross-member section 14b, as well as by means of welds 28 (which can be seen in the enlarged view of Figure 3) between the front section of the crash-box 16 and the rear vertical wall 22 of the cross-member section 14b.

Moreover, as can be noted in Figure 3, the rear vertical wall 22 of the cross-member 14 forms at its side ends a pair of flanges 30, which are folded at right angles and are welded at their front edges to the vertical wall 20a of the profiled piece 20 of the cross-member 14 by means of respective calibrated welds 32. The calibrated welds 32 form the sole connection between the rear vertical wall 22 and the profiled piece 20 at the inclined side sections 14b of the cross-member 14. Along these sections, in fact, the rear vertical wall 22 simply rests against the rear edges of the two horizontal walls 20b and 20c of the profiled piece 20. Apart from that, the rear vertical wall 22 is connected to the profiled piece 20 by means of calibrated welds 34 which can be seen in the perspective view of Figure 2.

The calibrated welds 32 and 34 are to be understood as welds with a very low strength, so as to give way immediately in the event of an impact under the effect of a tensile force tending to separate the two parts joined by means of welding.

The behaviour of the structure 10 in the event of a front impact will now be described with reference to Figures 4 to 6.

Figure 4 shows the structure 10 in the deformed condition upon a front impact against a side section 14b of the cross-member 14 at an impact angle of 0° (as indicated by the arrow F₀). Upon an impact of this type, the side section 14b of the cross-member 14 is deformed by buckling and rotates with respect to the remaining part of the cross-member 14 about a vertical axis of rotation defined by an elastic hinge H1 formed by the joining section 14c of the cross-member 14. The crash-box 16 arranged on the side affected by the impact is also deformed by buckling, thus absorbing the impact energy and avoiding damages to the respective strut 12. On the other hand, the part of the structure 10, in particular the strut 12, arranged on the opposite side to the one affected by the impact remains undeformed.

A behaviour similar to the one described above also occurs in the case of a front impact against a side section 14b of the cross-member 14 at an impact angle of 10° (as indicated by the arrow F₁₀), as shown in Figure 5.

As shown in the detailed view of Figure 6, in both cases (impact at 0° and impact at 10°) the fact that no damage is suffered by the crash-box 16 and in particular by the strut 12 arranged on the opposite side to the one where the impact occurs is essentially due to the crash-boxes 16 not being firmly connected to the respective side sections 14b of the cross-member 14. As explained above, each crash-box 16 engages in fact the respective inclined side section 14b of the cross-member 14 by means of the retaining lugs 26 and is also welded to the rear vertical wall 22 by means of the calibrated welds 28. In turn, the rear vertical wall 22 is connected with its side flanges 30 to the profiled piece 20 by means of calibrated welding 32, but simply rests against the profiled piece 20 along the two inclined side sections 14b. This has the effect that, upon an impact, the part of the cross-member 14 arranged on the opposite side to the one suffering the impact is able to rotate both about the elastic hinge H1 mentioned above and about a further hinging point H2 located at the transversely inner vertical edge of the front section of the crash-box 16 for connection to the cross-member 14. Following this rotation, the inclined side section 14b of the cross-member 14 opposite to the impact zone is released from connection to the crash-box 16 via the lugs 26, as indicated by the gap (indicated G in Figure 6) which is created between the cross-member section 14b and the crash-box 16, or more exactly between the profiled piece 20 and the rear vertical wall 22 firmly connected to the crash-box 16. Consequently, no stresses are transmitted from the cross-member 14 to the strut 12 on the opposite side to the impact zone.

Naturally, the principle of the invention remaining unchanged, the embodiments and the constructional details may vary widely with respect to those described and illustrated purely by way of a non-limiting example.

## Claims

1. Vehicle impact energy absorbing structure (10) comprising:
a pair of lateral side struts (12),
a cross-member (14) for connection of the struts (12), which integrally form a central section (14a) and a pair of side end sections (14b) inclined (α) with respect to the central section (14a), and
a pair of support members of the crash-box type (16), each arranged between a respective strut (12) and a respective side end section (14b) of the cross-member (14); wherein
the cross-member (14) has a box-shaped structure comprising a profiled piece (20) with a cross-section which is open towards the struts (12) and the crash-boxes (16) and with a closing wall (22) connected to the profiled piece (20) so as to close the cross-section thereof; **characterized in that**,
in the zone of the side end sections (14b) of the cross-member (14) the closing wall (22) of the cross-member (14) is firmly connected (28) to the crash-boxes (16) while it is releasably connected to the profiled piece (20).

2. Structure (10) according to Claim 1, wherein the profiled piece (20) and the closing wall (22) of the cross-member (14) are connected by means of calibrated welds (32, 34) .

3. Structure (10) according to Claim 1 or Claim 2, wherein the profiled piece (20) of the cross-member (14) has a substantially C-shaped cross-section, with a vertical wall (20a) and a pair of horizontal walls (20b, 20c), i.e. an upper wall and a lower wall, respectively, and wherein the closing wall (22) of the cross-member (14) forms at its side ends a pair of folded flanges (30) which are connected to the vertical wall (20a) of the profiled piece (20) by means of calibrated welds (32).

4. Structure (10) according to any of the preceding claims, wherein the side end sections (14b) of the cross-member (14) are substantially straight.

5. Structure (10) according to any of the preceding claims, wherein the side end sections (14b) of the cross-member (14) are connected to the central section (14a) by means of respective joining sections (14c).

6. Structure (10) according to any of the preceding claims, wherein the profiled piece (20) of the cross-member (14) has a bellows configuration adapted to be deformed by buckling upon an impact in a mainly longitudinal direction.

7. Structure (10) according to any of the preceding claims, wherein the two crash-boxes (16) have a front cross-section interfacing with the cross-member (14) which is inclined parallel to the end side sections (14b) of the cross-member (14).

8. Structure (10) according to any of the preceding claims, wherein each side end section (14b) of the cross-member (14) is connected to the respective crash-box (16) by means of retaining lugs (26).

9. Structure (10) according to Claim 8, wherein said retaining lugs (26) are formed by the crash-boxes (16) and are arranged so as to engage each an edge of the respective side end section (14b) of the cross-member (14).

10. Vehicle, in particular motor vehicle, provided with an impact energy absorbing structure (10) according to any of the preceding claims.

## Patentansprüche

1. Aufprallenergie absorbierende Fahrzeugstruktur (10), die umfasst:
ein Paar Querseitenstreben (12),
ein Querteil (17) zur Verbindung der Streben (12), das integral einen Mittelabschnitt (14a) und ein Paar seitlicher Endabschnitte (14b) aufweist, die in Bezug auf den Mittelabschnitt (14a) geneigt (α) sind, und
ein Paar Stützteile vom Crashbox-Typ (16), die jeweils zwischen einer entsprechenden Strebe (12) und einem entsprechenden seitlichen Endabschnitt (14b) des Querteils (14) angeordnet sind;
wobei
das Querteil (14) eine kastenförmige Struktur aufweist, die ein Profilstück (20) mit einem Querschnitt, der zu den Streben (12) und den Crash-Box-Elementen (16) hin offen ist, sowie mit einer Verschlusswand (20) umfasst, die mit dem Profilstück (20) verbunden ist, um seinen Querschnitt zu verschließen; **dadurch gekennzeichnet, dass**
in der Zone der seitlichen Endabschnitte (14b) des Querteils (14) die Verschlusswand (22) des Querteils (14) fest mit den Crash-Box-Elementen (16) verbunden ist (28), während sie mit dem Profilstück (20) lösbar verbunden ist.

2. Struktur (10) nach Anspruch 1, wobei das Profilstück (20) und die Verschlusswand (22) des Querteils (14) mittels kalibrierter Schweißnähte (32, 34) verbunden sind.

3. Struktur (10) nach Anspruch 1 oder Anspruch 2, wobei das Profilstück (20) des Querteils (14) einen im Wesentlichen C-förmigen Querschnitt mit einer vertikalen Wand (20a) und einem Paar horizontaler Wände (20b, 20c), d.h. einer oberen Wand bzw. einer unteren Wand, hat und die Verschlusswand (22) des Querteils (14) an ihren seitlichen Enden ein Paar gebogener Flansche (30) aufweist, die mit der vertikalen Wand (20a) des Profilstücks (20) mittels kalibrierter Schweißnähte (32) verbunden sind.

4. Struktur (10) nach einem der vorangehenden Ansprüche, wobei die seitlichen Endabschnitte (14b) des Querteils (14) im Wesentlichen gerade sind.

5. Struktur (10) nach einem der vorangehenden Ansprüche, wobei die seitlichen Endabschnitte (14b) des Querteils (14) mittels jeweiliger Verbindungsabschnitte (14c) mit dem Mittelabschnitt (14a) verbunden sind.

6. Struktur (10) nach einem der vorangehenden Ansprüche, wobei das Profilstück (20) des Querteils (14) eine Balgform hat, die so eingerichtet ist, dass sie durch Stauchung bei einem Aufprall in einer hauptsächlich längs verlaufenden Richtung verformt wird.

7. Struktur (10) nach einem der vorangehenden Ansprüche, wobei die zwei Crash-Box-Elemente (16) einen vorderen Endabschnitt haben, der sich an das Querteil (14) anschließt, das parallel zu den seitlichen Endabschnitten (14b) des Querteils (14) geneigt ist.

8. Struktur (10) nach einem der vorangehenden Ansprüche, wobei jeder seitliche Endabschnitt (14b) des Querteils (14) mit dem jeweiligen Crash-Box-Element (16) mittels Befestigungsansätzen (26) verbunden ist.

9. Struktur (10) nach Anspruch 8, wobei die Befestigungsansätze (26) durch die Crash-Box-Elemente (16) gebildet werden und so angeordnet sind, dass sie jeweils mit einer Kante des entsprechenden seitlichen Endabschnitts (14b) des Querteils (14) in Eingriff kommen.

10. Fahrzeug, insbesondere Kraftfahrzeug, das mit einer Aufprallenergie absorbierenden Struktur (10) nach einem der vorangehenden Ansprüche versehen ist.

## Revendications

1. Structure d'absorption d'énergie d'impact de véhicule (10) comportant :
une paire de montants latéraux (12),
une traverse (14) pour le raccordement des montants (12), qui forment intégralement une section centrale (14a) et une paire de sections d'extrémité latérales (14b) inclinées (α) par rapport à la section centrale (14a), et
une paire d'éléments de support du type boîte de déformation (16), chacun disposé entre un montant respectif (12) et une section d'extrémité latérale respective (14b) de la traverse (14) ; dans laquelle
la traverse (14) a une structure en forme de boîte comportant une pièce profilée (20) avec une section transversale qui est ouverte vers les montants (12) et les boîtes de déformation (16) et avec une paroi de fermeture (22) reliée à la pièce profilée (20) de façon à fermer sa section transversale ; **caractérisée en ce que,**
dans la zone des sections d'extrémité latérales (14b) de la traverse (14), la paroi de fermeture (22) de la traverse (14) est reliée fermement (28) aux boîtes de déformation (16) alors qu'elle est reliée de manière libérable à la pièce profilée (20).

2. Structure (10) selon la revendication 1, dans laquelle la pièce profilée (20) et la paroi de fermeture (22) de la traverse (14) sont reliées au moyen de soudures calibrées (32, 34).

3. Structure (10) selon la revendication 1 ou la revendication 2, dans laquelle la pièce profilée (20) de la traverse (14) a une section transversale sensiblement en forme de C, avec une paroi verticale (20a) et une paire de parois horizontales (20b, 20c), c'est-à-dire une paroi supérieure et une paroi inférieure, respectivement, et dans laquelle la paroi de fermeture (22) de la traverse (14) forme au niveau de ses extrémités latérales une paire de brides pliées (30) qui sont reliées à la paroi verticale (20a) de la pièce profilée (20) au moyen de soudures calibrées (32).

4. Structure (10) selon l'une quelconque des revendications précédentes, dans laquelle les sections d'extrémité latérales (14b) de la traverse (14) sont essentiellement droites.

5. Structure (10) selon l'une quelconque des revendications précédentes, dans laquelle les sections d'extrémité latérales (14b) de la traverse (14) sont reliées à la section centrale (14a) au moyen de sections de jonction respectives (14c).

6. Structure (10) selon l'une quelconque des revendications précédentes, dans laquelle la pièce profilée (20) de la traverse (14) a une configuration de soufflets prévue pour être déformée par flambage lors d'un impact dans une direction principalement longitudinale.

7. Structure (10) selon l'une quelconque des revendications précédentes, dans laquelle les deux boîtes de déformation (16) ont une section transversale avant assurant l'interface avec la traverse (14) qui est parallèle inclinée par rapport aux sections latérales d'extrémité (14b) de la traverse (14).

8. Structure (10) selon l'une quelconque des revendications précédentes, dans laquelle chaque section latérale d'extrémité (14b) de la traverse (14) est reliée à la boîte de déformation respective (16) au moyen de pattes de retenue (26).

9. Structure (10) selon la revendication 8, dans laquelle lesdites pattes de retenue (26) sont formées par les boîtes de déformation (16) et sont prévues pour engager chacune un bord de la section d'extrémité latérale respective (14b) de la traverse (14).

10. Véhicule, en particulier véhicule à moteur, pourvu d'une structure d'absorption d'énergie d'impact (10) selon l'une quelconque des revendications précédentes.
